# EUROPÄISCHE PATENTSCHRIFT

(11) **EP 2 961 552 B1**
(45) Veröffentlichungstag und Bekanntmachung des Hinweises auf die Patenterteilung: **28.10.2020**
(21) Anmeldenummer: 14704279.0
(22) Anmeldetag: 30.01.2014
(51) Int. Cl.: B23F 5/16, B23F 17/00, B23F 19/10

(54) **VERFAHREN ZUR SPANENDEN ERZEUGUNG ODER BEARBEITUNG EINER VERZAHNUNG UND VERZAHNUNGSMASCHINE**
METHOD FOR CUTTING OR MACHINING GEAR TEETH AND GEAR-CUTTING MACHINE
PROCÉDÉ DE FABRICATION OU D'USINAGE PAR ENLÈVEMENT DE MATIÈRE D'UNE DENTURE, ET MACHINE DE TAILLAGE D'ENGRENAGES

(30) Priorität: 26.02.2013 DE 102013003290
(43) Veröffentlichungstag der Anmeldung: 06.01.2016
(73) Patentinhaber: Gleason-Pfauter Maschinenfabrik GmbH, 71636 Ludwigsburg (DE)
(72) Erfinder: BROGNI, Johannes, CH-3293 Dotzigen (CH); PETRALLIA, Domenico, CH-3006 Bern (CH); WITSCHI, Oswald, CH-2554 Meinisberg (CH)
(74) Vertreter: Leinweber & Zimmermann
(86) Internationale Anmeldenummer: PCT/EP2014/000250
(87) Internationale Veröffentlichungsnummer: WO 2014/131488

(56) Entgegenhaltungen:
- WO-A1-2011/087759
- DE-A1- 10 211 129
- DE-B- 1 284 256
- JP-A- 2005 022 026
- US-A- 2 278 300
- US-A- 2 916 971
- US-A1- 2007 020 058

## Beschreibung

Die Erfindung betrifft ein Verfahren zur spanenden Erzeugung oder Bearbeitung gemäß dem Oberbegriff des Anspruchs 1, ein Steuerprogramm für ein solches Verfahren sowie eine zur Ausführung des Verfahrens geeignete Verzahnungsmaschine.

Spanende Bearbeitungsverfahren mit einer solchen Kinematik der beteiligten Maschinenachsen sind seit mehr als hundert Jahren bekannt (DE 243 514). Dazu gehört beispielsweise das Wälzschälen eines außen- oder innenverzahnten zylindrischen Rades mit einem Schälrad. Eine weitergehende Beschreibung der Kinematik des Wälzschälens und dessen Abgrenzung gegenüber beispielseise dem Wälzfräsen ist auch in DE 10 2011 009 027 A1 zu finden, deren Offenbarungsgehalt bezüglich der Maschinenachskinematik (Absätze [0003] bis [0008]) durch Bezugnahme eingeschlossen wird. Zudem zählt das Wälzschälen, das im Hause der Anmelderin auch als "power skiving" bezeichnet wird, zu den bevorzugten Anwendungsformen des erfindungsgemäßen Verfahrens.

Trotz der bereits durch die aufgrund der Kinematik der Maschinenachsen erreichbaren vergleichsweise kurzen Bearbeitungszeiten zur Herstellung der Verzahnung am Werkstück liegt der Erfindung die Aufgabe zugrunde, ein Verfahren der eingangs genannten Art insbesondere im Hinblick auf die Gesamtbearbeitungszeit des Werkstückes zu verbessern.

DE 10 211 129 offenbart ein Verfahren zum Wälzfräsen außenverzahnter Werkstücke.

US 2007/0200058 A1 offenbart ein Verfahren zur Bearbeitung von bevel gears.

US 2,916,971 offenbart ein Verfahren zum Schaben außenverzahnter Werkstücke.

DE 1 284 256 offenbart eine Wälzfräsmaschine nebst Entgratvorrichtung zum Entgraten der Stirnseiten von außenverzahnten Zahnrädern.

US 2,278,300 offenbart ein Verfahren zum Wälzschälen außenverzahnter Werkstücke.

WO 2011/087759 A1 betrifft ein Verfahren zur Herstellung von bevel gears.

JP 2005/022026 A offenbart zwei miteinander gekoppelte scheibenförmige Entgratwerkzeuge zur Entgratbearbeitung einer beispielsweise durch Wälzstoßen erzeugten Innenverzahnung komplexerer Geometrie.

DE 10 2007 015 357 A1 offenbart einen von außen angreifenden Entgratstahl bei der Wälzschälbearbeitung außenverzahnter Werkstücke.

Diese Aufgabe wird in verfahrensmäßiger Hinsicht durch eine Weiterbildung des Verfahrens der eingangs genannten Art mit den Merkmalen von Anspruch 1 gelöst.

Dabei beruht die Erfindung auf der überraschenden Erkenntnis, dass trotz der sehr hohen Drehzahlen des Werkstücks von 1200 U/min, oder höher, bevorzugt 1600 U/min oder höher, weiter bevorzugt von 2000 U/min oder höher, insbesondere 2400 U/min oder höher, zusätzlich zu der Bearbeitung mit dem verzahnten Werkzeug noch eine weitere Parallelbearbeitung des Werkstücks möglich ist. Die weitere Bearbeitung wäre andernfalls an einem anderen Ort und/oder zu einer anderen Zeit vorzunehmen und daher die Gesamtzeit zur Herstellung des Werkstücks erhöhen.

In einer besonders bevorzugten Gestaltung ist das weitere Bearbeiten ein Drehen. Damit können zusätzlich zur Verzahnung des Werkstücks weitere Werkstückkonturen geschaffen werden, beispielsweise ein Einstich. Hierzu macht man sich die hohen Werkstückdrehzahlen der Bearbeitung sogar besonders zunutze.

Alternativ oder zusätzlich kann auch daran gedacht werden, bereits an den Zahnkanten der Verzahnung des Werkstücks entstandene oder entstehende Grate zu beseitigen.

Bevorzugt ist vorgesehen, dass das für die weitere Bearbeitung vorgesehene Bearbeitungswerkzeug bezüglich der Werkstückachse mit Radialkomponente beweglich ist. Somit kann beispielsweise die Tiefe eines Einstiches durch eine Relativbewegung des weiteren Bearbeitungswerkzeuges variiert werden.

In einer weiteren bevorzugten Gestaltung soll das Bearbeitungswerkzeug bezüglich der Werkstückachse auch mit Axialkomponente beweglich sein. Dadurch wird eine größere Freiheit in der axialen Positionierung beispielsweise eines Einstiches erreicht.

Erfindungsgemäß vorgesehen ist eine Innenbearbeitung eines innenverzahnten Werkstückes.

Desweiteren ist erfindungsgemäß vorgesehen, dass das weitere Bearbeitungswerkzeug und/oder seine Halterung neben dem verzahnten Werkzeug den von der Innenverzahnung radial umschlossenen Raum wenigstens teilweise durchdringt. Insoweit wird zusätzlich die Möglichkeit eröffnet, Einstiche an der innenliegenden Werkstückseite des Werkstückes zu erzeugen, aber auch Grate an Zahnkanten der Innenverzahnung an der der Bearbeitungsseite für das verzahnte Werkzeug abgewandten Seite zu entfernen.

Grundsätzlich ist das Verfahren über einen vergleichsweise großen Bereich von Achskreuzwinkeln anwendbar. So erhält man beispielsweise bei Achskreuzwinkeln von mehr als 15 bis 45° gute Schnitteigenschaften, und es sind auch große Vorschübe bei der Herstellung der Verzahnung möglich. In einer besonders bevorzugten Verfahrensgestaltung erfolgt die Verzahnungsbearbeitung unter einem Achskreuzwinkel von 15° oder weniger. Damit gelingen bei zufriedenstellenden Schnittgeschwindigkeiten ausreichend hohe Drehzahlen, obwohl nur geringe Vorschübe möglich sind und nur ein kurzer Spanweg besteht. Man nähert sich von der Verzahnungsgeometrie eher derjenigen des Wälzstoßens an. Andererseits wird es jedoch bevorzugt, mit einem Achskreuzwinkel von wenigstens 5°, bevorzugt wenigstens 8° zu arbeiten. Auf diese Weise wird verhindert, dass Material vor dem Werkzeug hergeschoben wird und sich keine saubere Spanbildung mehr ergibt.

Die Erfindung stellt weiter ein Steuerprogramm unter Schutz, welches, wenn auf einer Steuereinrichtung einer Verzahnungsmaschine ausgeführt, die Verzahnungsmaschine zur Durchführung eines Verfahrens nach einem der vorhergehend angegebenen Verfahrensaspekte steuert.

Desweiteren stellt die Erfindung in vorrichtungstechnische Hinsicht eine Wälzschälmaschine mit den Merkmalen von Anspruch 8 bereit. Es ist eine Maschine zur spanenden Erzeugung oder Bearbeitung einer Verzahnung eines mit sehr hoher Drehzahl um seine Rotationsachse drehend angetriebenen Werkstücks mit einem verzahnten und um seine Rotationsachse drehend angetriebenen Werkzeug, mit Maschinenachsen zur Einstellung des Achskreuzwinkels und des Achsabstands zwischen der Werkstück- und der Werkzeugachse sowie wenigstens einer Maschinenachse für eine Änderung der Relativlage zwischen Werkstück und Werkzeug in Richtung der Werkstückachse unter Schutz, die im wesentlichen gekennzeichnet ist durch wenigstens eine zusätzliche Bewegungsachse, über die ein weiteres Bearbeitungswerkzeug mit Bewegungskomponente orthogonal zur Werkstückachse in Bearbeitungseingriff mit dem Werkstück bringbar ist.

Die Vorteile der erfindungsgemäßen Verzahnungsmaschine ergeben sich aus den Vorteilen des erfindungsgemäßen Verfahrens.

Dazu ist insbesondere eine zweite zusätzliche Bewegungsachse vorgesehen, über die das weitere Bearbeitungswerkzeug mit Bewegungskomponente parallel zur Werkstückachse bewegbar ist.

Erfindungsgemäß ist vorgesehen, dass das weitere Bearbeitungswerkzeug und/oder seine Halterung für eine Anordnung wenigstens teilweise innerhalb des von der Innenverzahnung des zu bearbeitenden Werkstücks umschlossenen Raums bei gleichzeitiger dortiger Anwesenheit des verzahnten Werkzeuges ausgelegt und entsprechend an der Maschine angebracht ist.

Eine Steuereinrichtung der Verzahnungsmaschine kann mit dem erfindungsgemäßen Steuerprogramm ausgestattet sein.

Als Steuerung wird bevorzugt eine CNC Steuerung sämtlicher Maschinenachsen und zulässigen Bewegungsachsen vorgesehen. Die einzelnen Antriebe für die Maschinenachsen sind dabei bevorzugt Direktantriebe, insbesondere die Antriebe für die Rotation der Werkzeug- und Werkstückspindelachse.

Weitere Merkmale, Einzelheiten und Merkmale der Erfindung ergeben sich aus der nachfolgenden Beschreibung mit Bezug auf die beiliegenden Figuren, von denen
- Fig. 1: einen die vorhandenen Bewegungsachsen umfassenden Teil einer Verzahnungsmaschine in einer perspektivischen Draufsicht zeigt,
- Fig. 2: eine Darstellung einer Ankopplung eines weiteren Bearbeitungswerkzeugs an diese Verteilungsmaschine zeigt, und
- Fig. 3: eine andere Anordnung eines weiteren Bearbeitungswerkzeuges zeigt.

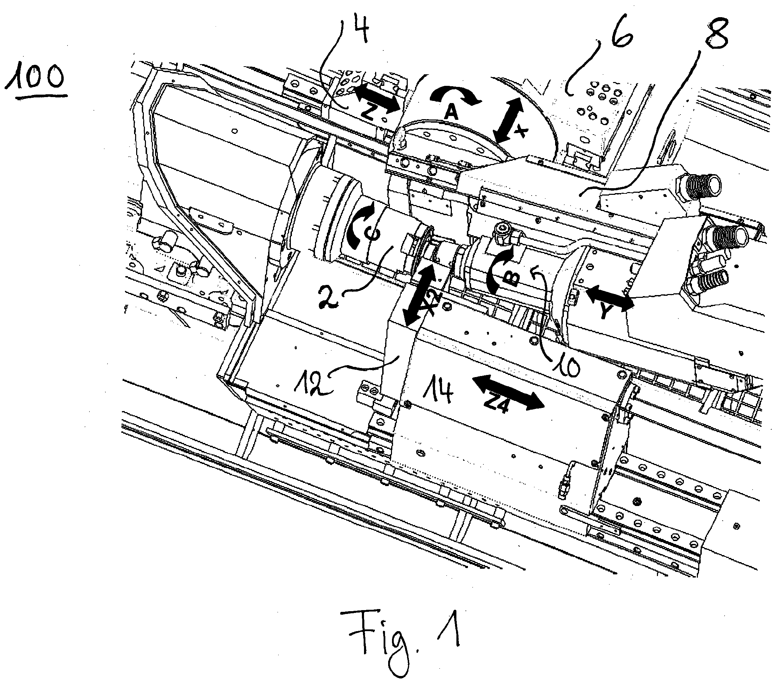

Fig. 1 zeigt in einer perspektivischen Draufsicht einen Bereich einer Verzahnungsmaschine, anhand dessen sich die Bewegungsachsen der Maschine erkennen lassen. Die Verzahnungsmaschine 100 ist für eine Werkstückbearbeitung ausgelegt, bei der die Erzeugung einer Verzahnung am Werkstück durch einen Bearbeitungseingriff zwischen Werkzeug und Werkstück erfolgt, die unter einem Achskreuzwinkel zwischen Werkstückdrehachse und Werkzeugdrehachse erfolgt. Im konkreten Beispielsfall wird die Maschine für das Wälzschälen von Innenverzahnungen eingesetzt, und als Schälmaschine bezeichnet.

Die Schälmaschine 100 weist eine an ihrem Maschinenbett fest gelagerte Werkstückspindel 2 auf, deren rotatorische Achse für die Werkstückdrehung mit C bezeichnet ist. Werkzeugseitig ist ein Horizontalschlitten 4 vorgesehen, der gegenüber dem Maschinenbett entlang einer Linearachse Z verschieblich ist, die parallel zur Achse der Werkstückspindel verläuft.

Der Horizontalschlitten 4 trägt einen weiteren Horizontalschlitten 6, der orthogonal zur Linearachse Z des Schlittens 4 entlang einer zweiten Linearachse X beweglich ist. Die Schlitten 4 und 6 bilden somit eine Kreuzschlittenanordnung.

Schwenkbar um eine zur zweiten Linearachse X parallele Schwenkachse A ist ein weiterer Linearschlitten 8 angeordnet, der die Werkzeugspindel 10 trägt. Die Linearbewegungsachse Y dieses verschwenkbaren Schlittens 8 wird somit durch die Schwenkstellung der Schwenkbewegung A bestimmt. Parallel zur Linearachse Y verläuft die Achse B für die Drehung des Werkzeuges. Über die Schwenkachse A wird somit der Achskreuzwinkel für die Erzeugung und Bearbeitung der Innenverzahnung des Werkstückes eingestellt.

Für die Werkstückspindeldrehung C und die Werkzeugspindeldrehung B sind in diesem Ausführungsbeispiel Direktantriebe vorgesehen. Wie üblich werden die Bewegungsachsen X, Y und Z sowie A, B und C über eine nicht dargestellte CNC-Steuerung für die Bearbeitung gesteuert. Soweit bisher beschrieben, ist der Aufbau der Werkzeugmaschine 100 bekannt. Die Maschine eignet sich neben dem Wälzschälen von Innen- oder Außenverzahnungen auch für Hartfeinbearbeitungen unter einem Achskreuzwinkel, aber auch für das Schaben (Weichschaben).

Die Schälmaschine 100 weist jedoch bezüglich der durch die Werkstück- und Werkzeugachsen C, B definierten Ebene entgegengesetzt der werkzeugseitigen Schlittenanordnung 4, 6, 8 eine weitere Bewegungseinrichtung auf. Diese ist in Form einer Kreuzschlittenanordnung 12, 14 realisiert, deren Schlitten 14 entlang der parallel zur ersten Linearachse Z verlaufenden vierten Linearachse Z4 beweglich am Maschinenbett geführt ist. Der Horizontalschlitten 14 trägt wiederum einen weiteren Horizontalschlitten 12, dessen Linearbewegungsachse X2 als fünfte Linearbewegungsachse der Schälmaschine 100 parallel zur zweiten Linearbewegungsachse X verläuft. Die Parallelität der Achsen Z4 und Z sowie X2 und X ist nicht zwingend erforderlich aber vorteilhaft. Wichtig in dieser Ausführungsform ist, dass einer der Schlitten 12, 14 eine Bewegung mit Bewegungskomponente parallel zur ersten Linearachse Z und der andere der Schlitten 12, 14 eine Bewegung mit Bewegungskomponente in Richtung der zweiten Linearachse X ausführen kann. Die Antriebe der Schlitten 12 und 14 sind ebenfalls von der Steuerung der Schälmaschine 100 CNC-gesteuert.

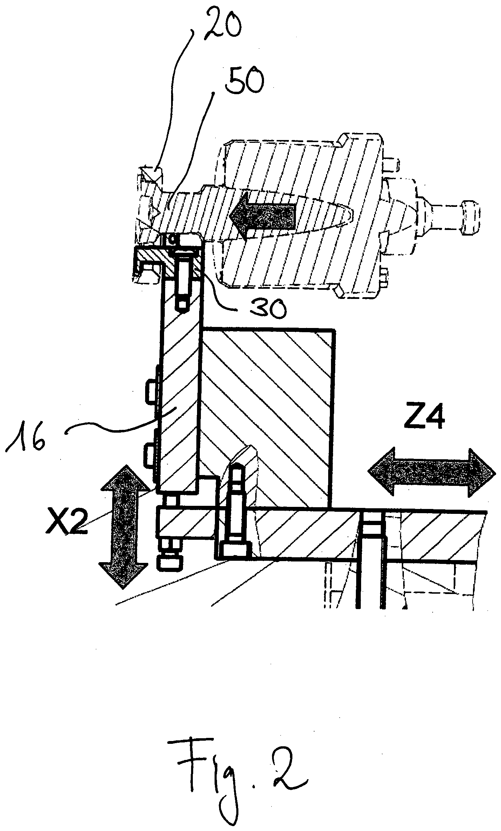

In Fig. 2 ist in einem partiellen horizontalen Schnitt dargestellt, wie ein Entgratwerkzeug 30, das an einem vom Horizontalschlitten 12 vorragenden und daran befestigten Arm 16 angebracht ist, gemeinsam mit dem Schälrad 50 innerhalb des von der Innenverzahnung 20 eines im weiteren nicht mehr dargestellten zu bearbeitenden Werkstücks angeordnet sind. Während das Schälrad 50 die Innenverzahnung 20 erzeugt, entgratet das Entgratwerkzeug 30 bereits die Zahnkanten an dem in Fig. 2 linken Verzahnungsende (in Zahnbreitenrichtung). Dabei halten das Entgratwerkzeug 30 und das Schälrad 50 einen deren gegenseitigen Kontakt vermeidenden Sicherheitsabstand ein. Man erkennt, dass sich das Entgratwerkzeug 30 in dieser oder einer modifizierten Form auch dazu verwenden ließe, in dem in Fig. 2 weiter nicht dargestellten Bereiches des innenverzahnten Werkstückes hinter der Innenverzahnung 20 noch einen innenliegenden Einstich zu drehen.

Für die seitliche Reihenfolge der Anordnung der Bearbeitungswerkzeuge kann vorteilhaft vorgesehen werden, bei zunächst noch zurückgezogenem Schälrad 50 zuerst das Entgratwerkzeug einzuführen und erst bei positioniertem Entgratwerkzeug das Schälrad 50 zu positionieren und die Erzeugung/Bearbeitung der Innenverzahnung 20 aufzunehmen.

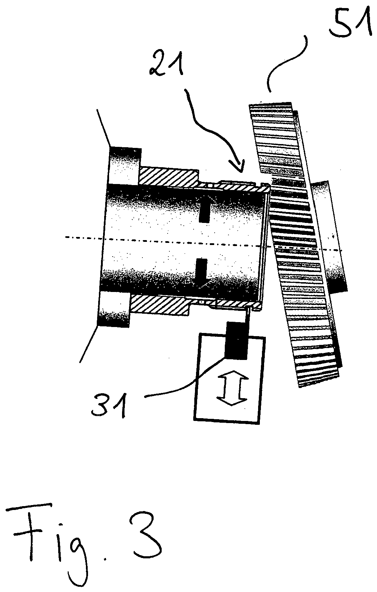

Anhand von Fig. 3 ist in einer weiteren Ausgestaltung die Erzeugung einer Außenverzahnung 21 an einem Werkstück mittels eines Schälrades 51 dargestellt. In dieser Darstellung sind die weiteren Bewegungsachsen für das Wälzschälen nicht dargestellt, man erkennt jedoch in der gegenüber der Werkstückachse unter einem Winkel angeordneten Schälradachse den Achskreuzwinkel. In Fig. 3 unten ist noch ein Hydraulikschlitten mit einem weiteren Bearbeitungswerkzeug 31 dargestellt, welches radial bezüglich des außenverzahnten Werkstückes bewegbar ist und mit dem parallel zur Bearbeitung des Schälrads 51 ein Einstich am Werkstück erzeugt wird. Mit dem weiteren Bearbeitungswerkzeug 31 können auch Entgratbearbeitungen an der gerade hergestellten Außenverzahnung 21 durchgeführt werden.

Die Erfindung ist nicht auf die in der Figurenbeschreibung dargestellten Einzelheiten eingeschränkt. Vielmehr können die in den nachfolgenden Ansprüchen sowie der obigen Beschreibung dargestellten Merkmale einzeln und in Kombination für die Verwirklichung der Erfindung in ihren verschiedenen Ausführungsformen wesentlich sein, ohne jedoch den durch die nachfolgenden Ansprüche definierten Schutzbereich zu verlassen.

## Patentansprüche

1. Verfahren zur spanenden Erzeugung oder Bearbeitung einer Innenverzahnung (20; 21) eines mit Drehzahlen von 1200 U/min oder höher um seine Rotationsachse drehend angetriebenen Werkstücks im Wälzschälverfahren mit einem verzahnten, um seine Rotationsachse drehend angetriebenen Werkzeug (50; 51) in Form eines Schälrads, bei dem Schälrad und Werkstück mit von Null verschiedenem Achskreuzwinkel zwischen ihren Rotationsachsen in schraubradgetriebeartigen wälzenden Zahneingriff gebracht werden,
**dadurch gekennzeichnet, dass** man während dieses Zahneingriffes eine weitere Innenbearbeitung an einem Werkstück und/oder seiner Verzahnung vornimmt, wobei ein Bearbeitungswerkzeug (30; 31) für die weitere Innenbearbeitung und/oder seine Halterung den von der Innenverzahnung (20) radial umschlossenen Raum neben dem Schälrad wenigstens teilweise durchdringt.

2. Verfahren nach Anspruch 1, bei dem die weitere Bearbeitung ein Drehen umfasst.

3. Verfahren nach Anspruch 1 oder 2, bei dem die weitere Bearbeitung ein Entgraten umfasst.

4. Verfahren nach einem der vorhergehenden Ansprüche, bei dem das Bearbeitungswerkzeug (30; 31) für die weitere Bearbeitung mit bezüglich der Werkstückachse orthogonaler Bewegungskomponente (X2) beweglich ist.

5. Verfahren nach einem der vorhergehenden Ansprüche, bei dem das Bearbeitungswerkzeug (30; 31) für die weitere Bearbeitung mit bezüglich der Werkstückachse paralleler Bewegungskomponente (Z4) beweglich ist.

6. Verfahren nach einem der vorhergehenden Ansprüche, bei dem der Achskreuzwinkel 15° oder kleiner ist, bevorzugt 13° oder kleiner, insbesondere 12° oder kleiner, und/oder 5° oder größer, bevorzugt 8° oder größer.

7. Steuerprogramm, welches bei Ausführung auf einer Steuereinrichtung einer Verzahnungsmaschine diese zur Durchführung eines Verfahrens nach einem der vorhergehenden Ansprüche steuert.

8. Wälzschälmaschine (100) zur spanenden Erzeugung oder Bearbeitung einer Innenverzahnung (20) eines mit Drehzahlen von 1200 U/min oder höher um seine Rotationsachse drehend angetriebenen Werkstücks mit einem verzahnten und um seine Rotationsachse drehend angetriebenen Werkzeug (50) in Form eines Schälrades, mit Maschinenachsen (A, X) zur Einstellung des Achskreuzwinkels und des Achsabstands zwischen der Werkstück- und der Werkzeugachse sowie wenigstens einer Maschinenachse (Z) für eine Änderung der Relativlage zwischen Werkstück und Schälrad in Richtung der Werkstückachse,
**gekennzeichnet durch** wenigstens eine zusätzliche Bewegungsachse (X2), über die ein weiteres Bearbeitungswerkzeug (30) mit Bewegungskomponente orthogonal zur Werkstückachse derart in Bearbeitungseingriff mit dem Werkstück bringbar ist, dass es wenigstens teilweise innerhalb des von der Innenverzahnung des zu bearbeitenden Werkstücks umschlossenen Raumes bei gleichzeitiger dortiger Positionierung des verzahnten Werkzeuges (50) angeordnet ist, um an dem Werkstück eine Innenbearbeitung durchzuführen.

9. Wälzschälmaschine nach Anspruch 8, mit einer zweiten zusätzlichen Bewegungsachse (Z4), über die das weitere Bearbeitungswerkzeug mit Bewegungskomponente parallel zur Werkstückachse bewegbar ist.

10. Wälzschälmaschine nach einem der Ansprüche 8 oder 9, mit einer mit einem Steuerprogramm nach Anspruch 7 ausgestatteten Steuereinrichtung.

## Claims

1. A method for manufacturing or machining internal gear teeth (20; 21) by chip removal on a workpiece which is driven in a rotary movement around its axis of rotation at speeds of rotation of 1200 rpm or higher in a skiving process using a toothed tool (50; 51), in the form of a skiving wheel, which is driven in a rotary movement around its axis of rotation, wherein the skiving wheel and workpiece are brought into a rolling tooth engagement in the manner of a helical gear transmission with their axes of rotation crossing each other at an angle different to zero,
**characterised in that** a further internal machining operation is performed on the workpiece and/or on its gear teeth during this tooth engagement, wherein a machining tool (30; 31) for the further internal machining operation and/or its holder penetrates at least partially the space, next to the skiving wheel, which is radially surrounded by the internal gear teeth (20).

2. The method according to claim 1, wherein the further machining operation comprises a turning operation.

3. The method according to claim 1 or 2, wherein the further machining operation comprises a deburring operation.

4. The method according to one of the preceding claims, wherein a machining tool (30; 31) for the further machining operation is movable with a movement component (X2) orthogonal to the workpiece axis.

5. The method according to one of the preceding claims, wherein the machining tool (30; 31) for the further machining operation is movable with a movement component (Z4) parallel to the workpiece axis.

6. The method according to one of the preceding claims, wherein the angle at which the axes cross each other is 15° or less, preferably 13° or less, in particular 12° or less, and/or 5° or more, preferably 8° or more.

7. A control programme which, when executed on a controller device of a gear-cutting machine, controls the latter in carrying out a method according to one of the preceding claims.

8. A skiving machine (100) for manufacturing or machining internal gear teeth (20) by chip removal on a workpiece which is driven in a rotary movement around its axis of rotation at speeds of rotation of 1200 rpm or higher with a toothed tool (50), in the form of a skiving wheel, which is driven in a rotary movement around its axis of rotation, with machine axes (A, X) for adjusting the angle at which the axes cross and the spacing of the workpiece axis and tool axis, and with at least one machine axis (Z) for altering the relative position between the workpiece and skiving wheel in the direction of the workpiece axis,
**characterised by** at least one additional movement axis (X2) along which a further machining tool (30) can be brought into a machining engagement with the workpiece with a movement component orthogonal to the workpiece axis such that the further machining tool is at least partly located within the space surrounded by the internal gear teeth of the workpiece to be machined, while the toothed tool (50) is concomitantly positioned therein order to perform an internal machining operation on the workpiece.

9. The skiving machine according to claim 8, comprising a second additional movement axis (Z4) along which the further machining tool is movable with a movement component parallel to the workpiece axis.

10. The skiving machine according to one of claims 8 and 9, comprising a controller device having a control programme according to claim 7.

## Revendications

1. Procédé de fabrication ou d'usinage par enlèvement de matière d'une denture interne (20 ; 21) d'une pièce à usiner entraînée en rotation à des vitesses de 1200 tours/min ou plus sur son axe de rotation selon un procédé de décolletage en développante à l'aide d'un outil denté (50 ; 51) sous la forme d'un pignon de décolletage entraîné en rotation sur son axe de rotation, dans lequel procédé le pignon de décolletage et la pièce à usiner sont amenés en engrènement circonférentiel à la manière d'un engrenage hélicoïdal selon un angle de croisement d'axes non nul entre leurs axes de rotation,
**caractérisé en ce qu'**on entreprend un usinage interne ultérieur sur une pièce à usiner et/ou sa denture pendant ledit engrènement, un outil d'usinage (30 ; 31) destiné audit usinage interne ultérieur et/ou sa monture traversant au moins partiellement l'espace proche du pignon de décolletage et entouré radialement par la denture interne (20).

2. Procédé selon la revendication 1, dans lequel l'usinage ultérieur comprend un usinage par tournage.

3. Procédé selon la revendication 1 ou 2, dans lequel l'usinage ultérieur comprend un ébarbage.

4. Procédé selon l'une quelconque des revendications précédentes, dans lequel un outil d'usinage (30 ; 31) destiné à l'usinage ultérieur, est mobile avec une composante de mouvement (X2) orthogonale à l'axe de la pièce à usiner.

5. Procédé selon l'une quelconque des revendications précédentes, dans lequel l'outil d'usinage (30 ; 31) destiné à l'usinage ultérieur est mobile avec une composante de mouvement (Z4) parallèle à l'axe de la pièce à usiner.

6. Procédé selon l'une quelconque des revendications précédentes, dans lequel l'angle de croisement d'axes fait 15° ou moins, de préférence 13° ou moins, notamment 12° ou moins, et/ou 5° ou plus, de préférence 8° ou plus.

7. Programme de commande qui, lorsqu'il est exécuté sur un dispositif de commande d'une machine à usiner les dentures, commande cette dernière pour mettre en œuvre un procédé selon l'une quelconque des revendications précédentes.

8. Machine de décolletage en développante (100) pour la fabrication ou l'usinage par enlèvement de matière d'une denture interne (20) d'une pièce à usiner entraînée en rotation à des vitesses de 1200 tours/min ou plus sur son axe de rotation à l'aide d'un outil denté (50) sous la forme d'un pignon de décolletage entraîné en rotation sur son axe de rotation, avec des axes machine (A, X) permettant le réglage de l'angle de croisement d'axes et le réglage de l'entraxe entre l'axe de la pièce à usiner et celui de l'outil, ainsi qu'au moins un axe machine (Z) permettant de changer la position relative entre la pièce à usiner et le pignon de décolletage dans le sens de l'axe de la pièce à usiner,
**caractérisé par** au moins un axe de mouvement supplémentaire (X2) permettant de mettre en prise d'usinage un outil d'usinage supplémentaire (30) avec une composante de mouvement orthogonale à l'axe de la pièce à usiner avec ladite pièce à usiner, et ce de telle façon que ledit outil d'usinage supplémentaire soit disposé au moins partiellement à l'intérieur de l'espace entouré par la denture interne de la pièce à usiner tandis que l'outil denté (50) s'y trouve également, pour réaliser un usinage interne sur la pièce à usiner.

9. Machine de décolletage en développante selon la revendication 8, comportant un deuxième axe de mouvement supplémentaire (Z4) sur lequel l'outil d'usinage supplémentaire est mobile avec une composante de mouvement parallèle à l'axe de la pièce à usiner.

10. Machine de décolletage en développante selon l'une des revendications 8 et 9, comportant un dispositif de commande doté d'un programme de commande selon la revendication 7.
